# EUROPÄISCHE PATENTANMELDUNG

(11) **EP 4 406 887 A1**
(43) Veröffentlichungstag der Anmeldung: **31.07.2024**
(21) Anmeldenummer: 23153079.1
(22) Anmeldetag: 24.01.2023
(51) Int. Cl.: B65G 54/02, B65G 54/00

(54) **FÖRDERVORRICHTUNG UND FÖRDERSYSTEM MIT EINER DERARTIGEN FÖRDERVORRICHTUNG**

(71) Anmelder: SOMIC Verpackungsmaschinen GmbH & Co. KG, 83123 Amerang (DE)
(72) Erfinder: KOEGEL, Christoph, 83134 Prutting (DE); OBERMAYER, Josef, 83083 Riedering (DE); SICKINGER, Mathias, 84539 Ampfing (DE)
(74) Vertreter: Weickmann & Weickmann PartmbB

(57) **Zusammenfassung**

Die Erfindung betrifft eine Fördervorrichtung (104) für ein Objekt und ein in Magnetschwebetechnologie ausgebildetes Fördersystem mit einer derartigen Fördervorrichtung (104). Die Fördervorrichtung (104) umfasst einen Mover (106), der relativ zu einer Bewegungsfläche des Fördersystems bewegbar ist, und eine mit dem Mover (106) verbindbare Aufnahme. Erfindungsgemäß umfasst der Mover (106) eine Rasteinheit (112) und die Aufnahme eine Gegenrasteinheit, die dazu eingerichtet sind, in einer Verrastungsrichtung miteinander in Rasteingriff zu stehen. Ferner umfasst die Rasteinheit (112) wenigstens eine Anlagefläche (116) und die Gegenrasteinheit wenigstens eine Gegenanlagefläche, welche in dem verbundenen Zustand in wenigstens einer von der Verrastungsrichtung verschiedenen Formschlussrichtung formschlüssig aneinander anliegen.

## Beschreibung

Die Erfindung betrifft eine Fördervorrichtung für ein nicht zur Fördervorrichtung gehörendes Objekt, umfassend einen Mover eines in Magnetschwebetechnologie ausgebildeten, nicht zur Fördervorrichtung gehörenden Fördersystems, wobei der Mover relativ zu einer Bewegungsfläche des Fördersystems bewegbar ist, und eine Aufnahme, die mit dem Mover in einer Verbindungsrichtung verbindbar ist und zur Aufnahme des Objekts dient.

Aus der zum Zeitpunkt der Einreichung der vorliegenden Anmeldung noch nicht veröffentlichten internationalen Patentanmeldung PCT/EP2022/067894 der Anmelderin ist es bekannt, dass auf einem Mover eines in Magnetschwebetechnologie ausgebildeten Fördersystems eine Aufnahme angebracht sein kann. Wie die Aufnahme an dem Mover angebracht ist, ist jedoch nicht offenbart.

Aus der US 2020/0030995 A1 ist ferner ganz allgemein eine in Magnetschwebetechnologie ausgebildete Vorrichtung bekannt.

Im Hinblick auf die hohen Anschaffungskosten von Movern ist es erwünscht, die Aufnahmen lösbar an den Movern anzubringen, um diese je nach der Beschaffenheit und Größe des zu fördernden Objekts zusammen mit einer Mehrzahl unterschiedlicher Aufnahmen einsetzen zu können.

Es ist Aufgabe der vorliegenden Erfindung, hierfür eine konstruktive Lösung bereitzustellen.

Erfindungsgemäß wird diese Aufgabe durch eine Fördervorrichtung der eingangs genannten Art gelöst, bei der der Mover eine Rasteinheit umfasst und die Aufnahme eine Gegenrasteinheit umfasst, wobei die Rasteinheit und die Gegenrasteinheit dazu eingerichtet sind, in einem verbundenen Zustand von Mover und Aufnahme in einer Verrastungsrichtung miteinander in Rasteingriff zu stehen, und wobei die Rasteinheit wenigstens eine Anlagefläche umfasst und die Gegenrasteinheit wenigstens eine Gegenanlagefläche umfasst, welche in dem verbundenen Zustand in wenigstens einer von der Verrastungsrichtung verschiedenen Formschlussrichtung formschlüssig aneinander anliegen.

Im Unterschied zu einer Verbindung von Mover und Aufnahme durch Verschrauben stellt eine Rastverbindung eine schnell herstellbare und schnell auch wieder lösbare Art der Verbindung dar. Ferner wird durch die formschlüssige Anlage von Mover und Aufnahme sichergestellt, dass sich die Aufnahme auch bei den durch Einsatz der Magnetschwebetechnologie erzielbaren hohen Beschleunigungen und Geschwindigkeiten nicht in unerwünschter Weise vom Mover lösen kann. Die von dem in Magnetschwebetechnologie ausgebildeten Fördersystem bereitgestellten Fördergeschwindigkeiten können daher in vollem Umfang ausgenutzt werden.

Zum Lösen des Rasteingriffs kann grundsätzlich ein Lösemechanismus vorgesehen sein oder ein Werkzeug eingesetzt werden. Damit ein unerwünschtes Lösen der Rastverbindung zwischen Rasteinheit und Gegenrasteinheit während des bestimmungsgemäßen Einsatzes vermieden wird, ist es von Vorteil, wenn eine Lösekraft, die entgegen der Verrastungsrichtung wirkt, größer ist als das Produkt aus der maximalen Beschleunigung des Movers in Verrastungsrichtung und der Summe der Massen des Movers, der Aufnahme und einer maximalen Beladung der Aufnahme.

Bei herkömmlichen in Magnetschwebtechnologie ausgebildeten Fördersystemen können Mover in jede Raumrichtung beschleunigt werden, beispielsweise mit bis zu 30m/s². Um die dabei entstehenden Beschleunigungskräfte, insbesondere in der wenigstens einen Formschlussrichtung, gut aufnehmen zu können, kann sich die wenigstens eine Formschlussrichtung in einer orthogonal zur Verbindungsrichtung verlaufenden Ebene erstrecken.

Erstreckt sich die Verrastungsrichtung in Verbindungsrichtung, so steht lediglich ein kurzer Weg zur Herstellung des Rasteingriffs zwischen der Rasteinheit und der Gegenrasteinheit zur Verfügung. Der Weg zur Herstellung des Rasteingriffs von der Rasteinheit und der Gegenrasteinheit kann jedoch vergrößert werden, indem sich die Verrastungsrichtung ebenfalls in der orthogonal zur Verbindungsrichtung verlaufenden Ebene erstreckt.

Hierdurch kann ferner die zwischen der Rasteinheit und der Gegenrasteinheit wirkende Haltekraft erhöht werden. Zudem können die Kräfte, die erforderlich sind, um den Mover in seiner Position zu halten, während die Aufnahme von dem Mover gelöst wird, reduziert werden. Schließlich kann dem beim Beschleunigen des Movers auftretenden Kippmoment entgegengewirkt und somit die Position der Aufnahme relativ zu dem mit ihr verbundenen Mover stabilisiert werden.

Die Fördervorrichtung kann sich in alle drei Raumrichtungen relativ zu der Bewegungsfläche des in Magnetschwebetechnologie ausgebildeten Fördersystems bewegen. Jedoch ist die Bewegung in einer Ebene parallel zur Bewegungsfläche üblicherweise die vorherrschende Bewegungsrichtung. Um ein unerwünschtes Lösen des Movers und der Aufnahme voneinander nicht nur bei einer Bewegung in einer Richtung innerhalb der sich parallel zu der Bewegungsfläche erstreckenden Ebene, sondern auch bei einer beliebigen Bewegung in dieser Ebene verhindern zu können, kann die Rasteinheit wenigstens eine weitere Anlagefläche umfassen und die Gegenrasteinheit wenigstens eine weitere Gegenanlagefläche umfassen, welche in dem verbundenen Zustand in einer sowohl von der Verrastungsrichtung als auch von der Formschlussrichtung verschiedenen weiteren Formschlussrichtung formschlüssig aneinander anliegen können.

Ein unerwünschtes Lösen des Movers und der Aufnahme voneinander kann ferner verhindert werden, wenn sich bezogen auf die Verbindungsrichtung die Verrastungsrichtung in Umfangsrichtung und die eine Formschlussrichtung in radialer Richtung erstreckt. Der Formschluss von Mover und Aufnahme in der sich in radialer Richtung erstreckenden Formschlussrichtung sichert die Aufnahme und den Mover gegen ein unerwünschtes Lösen in einer orthogonal zur Verbindungsrichtung erstreckenden Ebene. Besteht darüber hinaus ein weiterer Formschluss in einer sowohl von der Verrastungsrichtung als auch von der Formschlussrichtung verschiedenen weiteren Formschlussrichtung, so kann ein Formschluss in alle drei Raumrichtungen eines kartesischen Koordinatensystems hergestellt werden, der dem Lösen von Mover und Aufnahme bei rein translatorischer Bewegung des Movers entgegenwirkt.

Das Risiko eines unerwünschten Lösens kann weiter reduziert werden, indem die Rasteinheit wenigstens einen Anschlag umfasst und die Gegenrasteinheit wenigstens einen Gegenanschlag umfasst, welche dazu eingerichtet sind, im verbundenen Zustand zusammenzuwirken. Wirken Anschlag und Gegenanschlag in Verrastungsrichtung zusammen, so besteht lediglich in einer unidirektionalen Richtung der Verrastungsrichtung das Risiko eines unerwünschten Lösens, während in der anderen unidirektionalen Richtung der Verrastungsrichtung ein unerwünschtes Lösen durch das Zusammenwirken des Anschlags und des Gegenanschlags verhindert wird.

In Weiterbildung der Erfindung wird vorgeschlagen, dass eine der Einheiten, Rasteinheit oder Gegenrasteinheit, eine n-zählige Drehsymmetrie um eine, vorzugsweise parallel zur Verbindungsrichtung verlaufende, Drehachse aufweist, wobei n eine natürliche Zahl größer oder gleich 1 ist, und dass die Einheit n Rastarme mit jeweils einer Rastnase umfasst, wobei vorzugsweise ein rastnasenseitiges Ende eines der Rastarme in einem vorbestimmten Abstand von einem benachbarten Anschlag oder benachbarten Gegenanschlag der Einheit angeordnet ist, wobei sich der Abstand vorzugsweise über einen Winkel von ungefähr 360°/(6·n) bis ungefähr 360°/(4·n) um die Drehachse erstreckt. Somit ist lediglich eine einfache Drehbewegung mit geringem Kraftaufwand erforderlich, um Mover und Aufnahme miteinander verrasten oder aus der Verrastung lösen zu können. Insbesondere kann das Lösen ohne einen zusätzlichen Mechanismus oder den Einsatz eines speziellen Werkzeugs erfolgen. Ferner bewirkt die Drehsymmetrie eine gleichmäßigere Kraftübertragung zwischen Mover und Aufnahme. Für n >1 ergeben sich zudem mehrere Möglichkeiten, Mover und Aufnahme zueinander in Umfangsrichtung versetzt anordnen und somit schnell miteinander verrasten zu können. Vorteilhafterweise verläuft die Drehachse durch den Flächenschwerpunkt des Movers und/oder der Aufnahme.

Um die Drehbewegung weiter zu erleichtern, können die n Rastarme eine im Wesentlichen bogenförmige, insbesondere im Wesentlichen kreisbogenförmige, Gestalt aufweisen. Die Rastnase kann an einem elastischen Steg, vorzugsweise an dessen Ende, angeordnet sein, der sich für das Herstellen einer Rastverbindung zuerst elastisch verformt und anschließend in seine Ausgangsposition zurückkehrt, wenn Rasteinheit und Gegenrasteinheit miteinander in Eingriff stehen. Es hat sich gezeigt, dass ein vorteilhaftes Verhältnis zwischen der Steifigkeit eines einzelnen Rastarms und der erforderlichen Elastizität bei gleichzeitiger Reduzierung der Materialermüdung durch das Vorsehen von genau zwei Rastarmen erreicht werden kann.

Zum Verhindern eines unerwünschten Lösens von Mover und Aufnahme in Verbindungsrichtung kann eine der Einheiten, Gegenrasteinheit oder vorzugsweise die Rasteinheit, eine Hinterschneidung umfassen und die andere der Einheiten, Rasteinheit oder vorzugsweise die Gegenrasteinheit, eine Gegenhinterschneidung umfassen, wobei in dem verbundenen Zustand die Hinterschneidung und die Gegenhinterschneidung in der Verbindungrichtung miteinander in Eingriff treten können. Während der Überführung in den verbundenen Zustand kann die Hinterschneidung unter die Gegenhinterschneidung eintauchen, so dass ein Lösen in Verbindungsrichtung durch dazu Zusammenwirken von Hinterschneidung und Gegenhinterschneidung verhindert werden kann.

Um auch in diesem Fall ein optimiertes Zusammenwirken und ein einfaches Verbinden des Movers und der Aufnahme miteinander sicherzustellen, kann die Hinterschneidung oder die Gegenhinterschneidung an wenigstens einem der n Rastarme vorgesehen sein, wobei sich die Hinterschneidung oder die Gegenhinterschneidung über einen Winkel um die Drehachse erstrecken kann, der kleiner oder gleich dem Winkel ihres Abstands um die Drehachse ist.

Das In-Eingriff-Bringen von Rasteinheit und Gegenrasteinheit kann erleichtert werden, indem eine der Einheiten, Rasteinheit oder Gegenrasteinheit, als Vorsprung ausgebildet ist, und die andere der Einheiten, Gegenrasteinheit oder Rasteinheit, als Ausnehmung ausgebildet ist, wobei in dem verbundenen Zustand der Vorsprung wenigstens teilweise in der Ausnehmung aufgenommen ist. Die Ausnehmung kann beim Verbinden von Aufnahme und Mover die Relativbewegung mit dem Vorsprung führen. Ferner kann durch diesen Aufbau das Risiko einer Beschädigung der Rasteinheit und der Gegenrasteinheit im verbundenen Zustand reduziert werden, da die Ausnehmung den Vorsprung schützt. Beispielsweise kann im Falle einer linearen Steckverbindung die Ausnehmung schlitzförmig sein. Im Falle einer sich in Umfangsrichtung erstreckenden Verrastungsrichtung kann die Ausnehmung wenigstens abschnittsweise im Wesentlichen kreisförmig ausgebildet sein.

Vorteilhafterweise kann die Rasteinheit als von dem Mover hervorstehender Vorsprung ausgebildet sein und die Gegenrasteinheit als eine an der Aufnahme vorgesehene Ausnehmung ausgebildet sein. Hierdurch kann die Aufnahme auf einfache Weise gelagert werden, beispielsweise indem mehrere Aufnahmen übereinander gestapelt werden, ohne dass es zu Beschädigungen an der Gegenrasteinheit kommt.

An dieser Stelle sei darauf hingewiesen, dass die Rasteinheit an einer der Aufnahme zugwandten Seite des Movers und die Gegenrasteinheit an einer dem Mover zugewandten Seite der Aufnahme angeordnet sein können. Die Rasteinheit kann betriebsfest und lösbar, beispielsweise über eine Steckverbindung oder über eine Schraubverbindung oder über eine Bolzenverbindung, mit dem Mover verbunden sein. Auch die Gegenrasteinheit kann betriebsfest mit der Aufnahme verbunden sein. Um Gestehungskosten gering zu halten, kann die Gegenrasteinheit jedoch vorzugsweise einstückig mit der Aufnahme ausgebildet sein, beispielsweise indem Aufnahme und Gegenrasteinheit aus demselben Halbzeug gefräst oder mittels Spritzgussverfahren oder unter Anwendung eines additiven Fertigungsverfahrens hergestellt sind.

Um ein unerwünschtes Lösen des Movers und der Aufnahme weiter zu verhindern kann die Fördervorrichtung wenigstens eine weitere Verrastungseinheit umfassen, die einen Führungsvorsprung und eine Führungsnut umfasst, die dazu eingerichtet ist, den Führungsvorsprung aufzunehmen, umfasst, wobei ein Führungselement, Führungsvorsprung oder Führungsnut, an dem Mover angeordnet sein kann, und das andere Führungselement, Führungsnut oder Führungsvorsprung, an der Aufnahme angeordnet sein kann.

Ferner kann durch das Vorsehen eines Führungsvorsprungs und einer Führungsnut die Positioniergenauigkeit von Aufnahme und Movers relativ zueinander verbessert werden und das Beschädigungsrisiko reduziert werden. Dies ist insbesondere für Mover und Aufnahmen mit einer nicht-quadratischen Grundfläche oder bei einer Aufnahme, die größer als der Mover ist, von Vorteil. Ferner führt die Führungsnut den Führungsvorsprung während der Überführung von Mover und Aufnahme in den verbundenen Zustand und aus diesem heraus. Um das Einführen des Führungsvorsprungs in die Führungsnut zu vereinfachen, kann die Führungsnut eine Einführschräge aufweisen. Die Führungsnut kann ferner so geformt sein, dass sie der Bewegung der Rasteinheit und der Gegenrasteinheit folgt. Erfolgt die Verrastung der Rasteinheit und der Gegenrasteinheit beispielsweise durch eine lineare Bewegung, so weist die Führungsnut eine lineare Form auf. Erfolgt die Verrastung der Rasteinheit und der Gegenrasteinheit mittels einer Drehbewegung, so weist die Führungsnut eine gekrümmte, vorzugsweise kreisabschnittförmige, Form auf.

Um die Verbindung zwischen Mover und Aufnahme weiter gegen ein unerwünschtes Lösen zu sichern, kann die Führungsnut an einem von einem Einführende weg weisenden Ende einen Anschlag aufweisen, der dazu eingerichtet ist, im verbundenen Zustand an dem Führungsvorsprung anzuliegen, wobei vorzugsweise in der Führungsnut dem Anschlag vorgelagert eine Verrastungsausbuchtung ausgebildet sein kann. Der Anschlag verhindert eine weitere Relativbewegung zwischen Mover und Aufnahme über den Anschlag hinaus. Dem Anschlag vorgelagert heißt, dass sich der Führungsvorsprung beim Verrasten zuerst an der Verrastungsausbuchtung vorüberbewegt, bevor der Führungsvorsprung den Anschlag erreicht, beziehungsweise an dem Anschlag anliegt. Vorzugsweise ist der Abstand zwischen dem Anschlag und der Verrastungsausbuchtung kleiner oder gleich der Erstreckung des Führungsvorsprungs in gleicher Erstreckungsrichtung. Während des Verrastens von Mover und Aufnahme bewegt sich der Führungsvorsprung von dem Einführende weg bis zu dem Anschlag.

Die zum Verrasten erforderliche Elastizität eines Rastarms kann zu einem Lösen des wenigstens einen Formschlusses führen. Um dem entgegenwirken zu können, können der Führungsvorsprung und die Rastnase auf einer Geraden liegen, welche die Drehachse schneiden kann.

Um eine Wechselwirkung mit dem Magnetfeld des in Magnetschwebetechnologie ausgebildeten Fördersystem reduzieren und den Steuerungsaufwand zum Steuern der Fördervorrichtung gering halten zu können, wird vorgeschlagen, dass die Rasteinheit und/oder die Aufnahme aus einem elektrisch nicht leitendem und nicht magnetisierbaren Material, vorzugsweise Kunststoff, hergestellt ist bzw. sind. Dieser Kunststoff kann beispielsweise ABS sein.

Nachzutragen ist ferner, dass die Relativpositionierung von Mover und Aufnahme im gelösten Zustand als Vorbereitung für das Verrasten (Überführen in den verbundenen Zustand) erleichtert werden kann, wenn eine der Einheiten, Rasteinheit oder Gegenrasteinheit, einen Positionierungsvorsprung umfasst und die andere der Einheiten, Gegenrasteinheit oder Rasteinheit, einen entsprechende Positionierungsöffnung umfasst, die dazu eingerichtet ist, den Positionierungsvorsprung aufzunehmen. Die Positionierungsöffnung und/oder der Positionierungsvorsprung können in einem Flächenschwerpunkt der entsprechenden Fläche von dem Mover und/oder der Aufnahme angeordnet sein.

Je weiter der Schwerpunkt von dem Fächenmittelpunkt der Draufsichtsfläche des Movers entfernt ist, desto höher sind die für das Bewegen des Movers erforderlichen Magnetkräfte. Um den Schwerpunkt der Fördervorrichtung möglichst nah an dem Mover zu halten, kann eine Erstreckung der Rasteinheit in einer zu der Verbindungsrichtung orthogonalen Richtung größer oder gleich einer Erstreckung der Rasteinheit in Verbindungsrichtung und/oder eine Erstreckung der Gegenrasteinheit in der zu der Verbindungsrichtung orthogonalen Richtung größer oder gleich einer Erstreckung der Gegenrasteinheit in Verbindungsrichtung sein.

Gemäß einem zweiten Aspekt betrifft die Erfindung ein in Magnetschwebetechnologie ausgebildetes Fördersystem, umfassend einen Stator, welcher eine Bewegungsfläche aufweist. Das erfindungsgemäße Fördersystem ist dadurch gekennzeichnet, dass das Fördersystem wenigstens eine Fördervorrichtung nach einer Ausführungsform des ersten Aspekts umfasst, wobei der Mover relativ zu der Bewegungsfläche bewegbar ist.

Hinsichtlich der mit einem erfindungsgemäßen Fördersystem erzielbaren Vorteile sei auf die voranstehende Diskussion der erfindungsgemäßen Fördervorrichtung verwiesen. Ferner können Merkmale, die bezüglich der Fördervorrichtung beschrieben sind, auch auf das Fördersystem angewendet werden und umgekehrt.

Der Einsatz von Magnetschwebetechnologie ermöglicht einen schnellen und präzisen Transport von Objekten. Hierbei können Bewegungsrichtung, Bewegungsgeschwindigkeit und Beschleunigung des Movers gesteuert werden. Für eine hohe Förderrate der Fördervorrichtung werden hohe Beschleunigungen und Movergeschwindigkeiten bevorzugt. Damit auch bei derart hohen Beschleunigungen oder bei ruckartigen Änderungen der Beschleunigungen ein unerwünschtes Lösen der Rastverbindung zwischen Rasteinheit und Gegenrasteinheit vermieden wird, wird vorgeschlagen, dass eine entgegen der Verrastungsrichtung wirkende Lösekraft das Lösen von der Rasteinheit und der Gegenrasteinheit voneinander bewirken kann, wobei die Lösekraft größer ist als eine Beschleunigungskraft, die das Produkt von der maximalen Beschleunigung des Movers in dem Fördersystem in Verrastungsrichtung und der Summe der Masse der Fördervorrichtung und der Masse einer maximalen Beladung der Aufnahme ist. Die maximale Beschleunigung des Movers ist durch das in Magnetschwebetechnologie ausgebildete Fördersystem vorgegeben, bzw. an diesem messbar.

Die Erfindung wird im Folgenden anhand eines Ausführungsbeispiels mit Bezug auf die begleitenden Zeichnungen näher erläutert werden. Es stellt dar:
- Figur 1: eine schematische Darstellung eines erfindungsgemäßen Fördersystems mit einer erfindungsgemäßen Fördervorrichtung,
- Figuren 2a und 2b: Ansichten eines Movers mit einer Rasteinheit, und
- Figuren 3a und 3b: Ansichten einer Aufnahme mit einer Gegenrasteinheit.

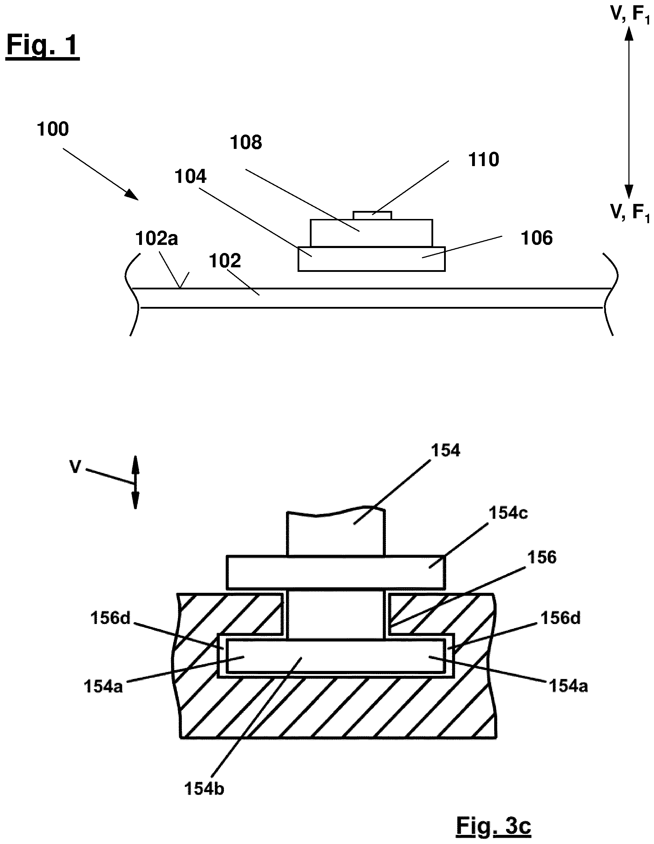

In Figur 1 ist ein in Magnetschwebetechnologie ausgebildetes Fördersystem ganz allgemein mit 100 bezeichnet. Das Fördersystem 100 umfasst einen Stator 102, welcher eine Bewegungsfläche 102a aufweist, sowie eine erfindungsgemäße Fördervorrichtung 104. An dieser Stelle sei darauf hingewiesen, dass das Fördersystem 100 nicht Teil der erfindungsgemäßen Fördervorrichtung 104 ist.

Die Fördervorrichtung 104 umfasst einen Mover 106 und eine Aufnahme 108. Der Mover 106 ist relativ zu der Bewegungsfläche 102a des Fördersystems 100 in alle drei Raumrichtungen bewegbar, zur Erfüllung der Förderfunktion jedoch überwiegend parallel zur Ebene der Bewegungsfläche 102a.

Die Aufnahme 108 ist mit dem Mover 106 in einer Verbindungsrichtung V verbindbar. Ferner dient die Aufnahme 108 dazu, ein ebenfalls nicht zu der Fördervorrichtung 104 gehörendes Objekt 110 aufzunehmen. Das Objekt 110 kann mittels der Fördervorrichtung 104 innerhalb des Fördersystems 100 transportiert werden.

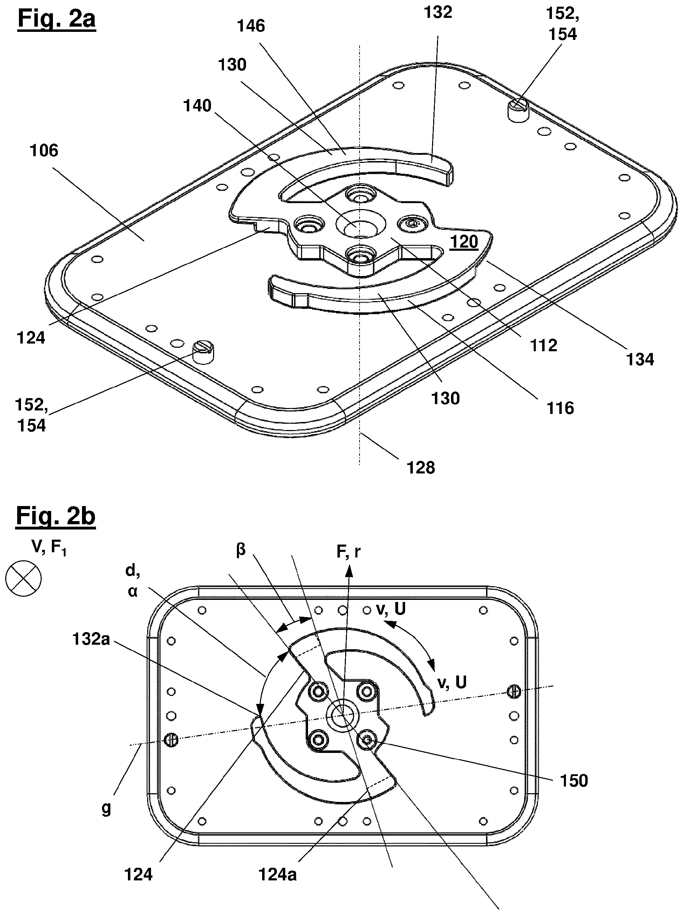

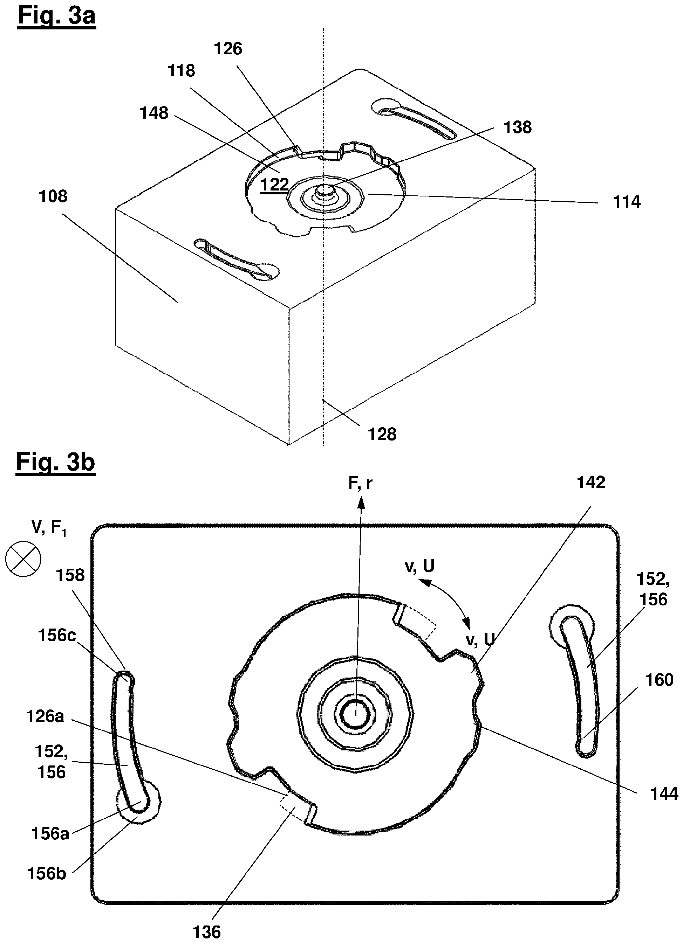

Zum Verbinden von Mover 106 und Aufnahme 108 umfassen der Mover 106 eine Rasteinheit 112 (siehe Figuren 2a und 2b) und die Aufnahme 108 eine Gegenrasteinheit 114 (siehe Figuren 3a und 3b). Die Rasteinheit 112 und die Gegenrasteinheit 114 sind dazu eingerichtet, in einem verbundenen Zustand von Mover 106 und Aufnahme 108, wie er in Figur 1 dargestellt ist, in einer Verrastungsrichtung v (siehe Figuren 2b und 3b) miteinander in Rasteingriff zu stehen.

Ferner umfasst die Rasteinheit 112 wenigstens eine Anlagefläche 116 und die Gegenrasteinheit 114 umfasst wenigstens eine Gegenanlagefläche 118. Die wenigstens eine Anlagefläche 116 und die wenigstens eine Gegenanlagefläche 118 liegen in dem verbundenen Zustand in wenigstens einer von der Verrastungsrichtung v verschiedenen Formschlussrichtung F formschlüssig aneinander an.

Die wenigstens eine Formschlussrichtung F erstreckt sich in einer orthogonal zu der Verbindungsrichtung V verlaufenden Ebene. Auch die Verrastungsrichtung v erstreckt sich in dieser orthogonal zur Verbindungrichtung V verlaufenden Ebene.

Die Verrastungsrichtung v der Fördervorrichtung 104 des vorliegenden Ausführungsbeispiels erstreckt sich, bezogen auf die Verbindungsrichtung V, in Umfangsrichtung U, während sich die Formschlussrichtung F bezogen auf die Verbindungsrichtung V in radialer Richtung r erstreckt. Hierdurch wird eine unerwünschte Relativbewegung von Mover 106 und Aufnahme 108 in der zu der Verbindungsrichtung V orthogonalen Ebene verhindert, also beispielsweise bei translatorischer Beschleunigung entlang der Bewegungsfläche 102a des Fördersystems 100.

Im verbundenen Zustand von Mover 106 und Aufnahme 108 liegen diese über wenigstens eine weitere Anlagefläche 120 der Rasteinheit 112 und wenigstens eine weitere Gegenanlagefläche 122 der Gegenrasteinheit 114 aneinander an. Zur Sicherung der Verbindung von Mover 106 und Aufnahme 108 in Verbindungsrichtung V umfasst die Rasteinheit 112 eine Hinterschneidung 134 und die Gegenrasteinheit 114 eine Gegenhinterschneidung 136. In dem verbundenen Zustand stehen die Hinterschneidung 134 und die Gegenhinterschneidung 136 miteinander formschlüssig in Eingriff. Die Verbindungrichtung V bildet also eine weitere Formschlussrichtung F₁.

Um verhindern zu können, dass sich die Rasteinheit 112 relativ zu der Gegenrasteinheit 114 über das Erreichen des Rasteingriffs in Verrastungsrichtung v weiterbewegt, umfasst die Rasteinheit 112 wenigstens einen Anschlag 124 und die Gegenrasteinheit 114 wenigstens einen Gegenanschlag 126.

In dem dargestellten Ausführungsbeispiel weisen die Rasteinheit 112 oder die Gegenrasteinheit 114 eine 2-zählige Drehsymmetrie um eine Drehachse 128 (in Figur 2a strichpunktiert dargestellt) auf. Sie können jedoch ganz allgemein eine n-zählige Drehsymmetrie um die Drehachse 128 aufweisen, wobei n eine positive ganze Zahl ist. Insbesondere umfasst die Rasteinheit 112 zwei Rastarme 130 mit jeweils einer Rastnase 132. Ein rastnasenseitiges Ende 132a ist in einem vorbestimmten Abstand d von einem benachbarten Anschlag 124 des benachbarten Rastarms 130 angeordnet. Der Abstand d erstreckt sich über einen Winkel α von ungefähr 30° (360°/6n mit n=2) bis ungefähr 45° (360°/4n mit n=2) um die Drehachse 128.

An jedem der Rastarme 130 kann eine Hinterschneidung 134 vorgesehen sein. Die Hinterschneidung 134 erstreckt sich um die Drehachse 128 über einen Winkel β. Der Winkel β ist kleiner oder gleich des Winkels α des Abstands d um die Drehachse 128.

Zur Unterstützung des Zusammenwirkens des wenigstens einen Anschlags 124 und des wenigstens einen Gegenanschlags 126 kann die Rasteinheit 112 einen weiteren Anschlag 124a umfassen und kann die Gegenrasteinheit 114 einen weiteren Gegenanschlag 126a umfassen. Der weitere Anschlag 124a ist an der Hinterschneidung 134 und der weitere Gegenanschlag 126a an der Gegenhinterschneidung 136 angeordnet. Der weitere Anschlag und der weitere Gegenanschlag 126a verlaufen im Wesentlichen orthogonal zur Umfangsrichtung U.

Um die Rasteinheit 112 und die Gegenrasteinheit 114 miteinander in Rasteingriff zu bringen und zu verbinden, wird die Aufnahme 108 in Umfangsrichtung U leicht versetzt auf den Mover 106 aufgelegt, so dass die Gegenhinterschneidung 136 in dem Abstand d zwischen einem Rastarm 130 und einem benachbarten Anschlag 124 positioniert ist. Das Auffinden der jeweiligen Drehachsen 128 von Aufnahme 108 und Mover 106 kann erleichtert werden, indem ein Positionierungsvorsprung 138 bei der einen Einheit, hier Gegenrasteinheit 114, und eine korrespondierende Positionierungsausnehmung 140 bei der anderen Einheit, hier der Rasteinheit 112, vorgesehen ist. Vorzugsweise verläuft die Drehachse 128 im verbundenen Zustand durch den Positionierungsvorsprung 138 und durch die Positionierungsausnehmung 140. Sind der Positioniervorsprung 138 und die Positionierungsausnehmung 140 jeweils in einem Flächenschwerpunkt von Mover 106 bzw. Aufnahme 108 vorgesehen, so kann die Aufnahme 108 in dem verbundenen Zustand mittig auf dem Mover 106 positioniert werden.

Um das Zusammenführen von Mover 106 (Figur 2a) und Aufnahme 108 (Figur 3a) erleichtern zu können, kann die Einheit ohne Rastarm 130, hier die Gegenrasteinheit 114, eine Aussparung 142 aufweisen, die dazu eingerichtet ist, die Rastnase 132 in einem unverrasteten, aber bereits verbundenen Zustand von Mover 106 und Aufnahme 108 aufzunehmen.

Liegen die weitere Anlagefläche 120 der Rasteinheit 112 und die Gegenanlagefläche 122 der Gegenrasteinheit 114 aneinander an, so wird die Aufnahme 108 oder der Mover 106 so in Verrastungsrichtung v gedreht, dass Rasteinheit 112 und Gegenrasteinheit 114 miteinander in Rasteingriff treten. Hierbei bewegt sich die Rastnase 132 aus der Aussparung 142 heraus bis sie an einem Rastanschlag 144 anliegt und die Rasteinheit 112 und die Gegenrasteinheit 114 miteinander in Rasteingriff treten. Da sich bei dem vorliegenden Ausführungsbeispiel die Verrastungsrichtung v in Umfangrichtung U erstreckt, wird die Aufnahme 108 relativ zum Mover 106 um die Drehachse 128 gedreht, hier im Uhrzeigersinn, um den Rasteingriff von Rasteinheit 112 und Gegenrasteinheit 114 herzustellen.

Spätestens wenn die Rasteinheit 112 und die Gegenrasteinheit 114 miteinander in Rasteingriff stehen, liegen auch die wenigstens eine Anlagefläche 116 und die wenigstens eine Gegenanlagefläche 118 formschlüssig aneinander an. Liegen die wenigstens eine Anlagefläche 116 und die wenigstens eine Gegenanlagefläche 118 bereits dann aneinander an, wenn die Aufnahme 108 versetzt zu dem Mover 108 angeordnet ist, so führt die Gegenanlagefläche 118 die Bewegung der Anlagefläche 116 während des In-Rasteingriffs-Bringens oder umgekehrt.

Jeder der Rastarme 130 liegt mit einer Anlagefläche 116 in der radialen Formschlussrichtung F formschlüssig an einer Gegenanlagefläche 118 an. Gemeinsam mit dem Rasteingriff der Rasteinheit 112 und der Gegenrasteinheit 114 in Verrastungsrichtung v in Umfangsrichtung U wird ein unerwünschtes Lösens des Movers 106 und der Aufnahme 108 voneinander in der sich orthogonal zur Verbindungsrichtung erstreckenden Ebene verhindert. Durch das Zusammenwirken der Hinterschneidung 134 und der Gegenhinterschneidung 136 sowie des hierbei entstehenden Formschlusses in der weiteren Formschlussrichtung F₁ wird ein unerwünschtes Lösen des Movers 106 und der Aufnahme 108 in alle Raumrichtungen verhindert.

Weiter erleichtert wird das Überführen in den verbundenen Zustand, da die Rasteinheit 112 als von dem Mover 106 hervorstehender Vorsprung 146 ausgebildet ist und die Gegenrasteinheit 114 als Ausnehmung 148 in der Aufnahme 108 ausgebildet ist. In dem verbundenen Zustand ist der Vorsprung 146 wenigstens teilweise in der Ausnehmung 148 aufgenommen. Wie aus Figur 3a zu ersehen ist, ist die Gegenrasteinheit 114 bei dem vorliegenden Ausführungsbeispiel einstückig mit der Aufnahme 108 verbunden. Und gemäß Figur 2a kann die Rasteinheit 112 betriebsfest mit dem Mover 106 verbunden sein. Hierzu ist wenigstens eine Mehrzahl von Verbindungselementen 150, beispielsweise Schrauben, vorgesehen.

Ferner weist die Fördervorrichtung 104 wenigstens eine weitere Verrastungseinheit 152 auf. Die wenigstens eine weitere Verrastungseinheit 152 umfasst einen Führungsvorsprung 154 und eine Führungsnut 156. Die Führungsnut 156 ist dazu eingerichtet, den Führungsvorsprung 154 aufzunehmen. Gemäß dem vorliegenden Ausführungsbeispiel ist eines der Führungselemente, nämlich der Führungsvorsprung 154, an dem Mover 106 angeordnet und das andere der Führungselemente, nämlich die Führungsnut 156, an der Aufnahme 108.

Werden nur der Mover 106 und die Aufnahme 108 versetzt zueinander angeordnet, so wird zum einen der Vorsprung 146 wenigstens teilweise von der Ausnehmung 148 aufgenommen. Zudem tritt der Führungsvorsprung 154 in die Führungsnut 156 ein, nämlich an einem Einführende 156a. Dies wird erleichtert, indem die Führungsnut 156 an dem Einführende 156a eine Einführschräge 156b aufweist.

Die Führungsnut 156 ist so geformt, dass die Relativbewegung von Führungsvorsprung 154 und Führungsnut 156 gleich der Relativbewegung von Aufnahme 108 und Mover 106 ist. Daher ist die Führungsnut 156 kreisbogenförmig geformt, wobei der Mittelpunkt des Kreisbogens auf der Drehachse 128 liegt.

Ferner weist die Führungsnut 156 an einem von dem Einführende 156a weg weisenden Ende 156c einen Anschlag 158 auf. Der Anschlag 158 ist dazu eingerichtet, im verbundenen Zustand an dem Führungsvorsprung 154 in der Verrastungsrichtung v anzuliegen. Eine weitere Bewegung des Führungsvorsprungs 154 von dem Einführende 156a weg wird durch den Anschlag 158 verhindert.

Mit Anschlag 158 ist also neben dem Anschlag 124 und dem Anschlag 124a noch ein weiterer in Umfangsrichtung wirkender Anschlag vorhanden.

Der Führungsvorsprung 154 wird in der Position, an der er an dem Anschlag 158 anliegt, durch eine Verrastungsausbuchtung 160 gesichert. Hierbei liegt der Führungsvorsprung 154 sowohl an dem Anschlag 158 als auch an der Verrastungsausbuchtung 160 an.

Die zum Verrasten erforderliche Elastizität eines Rastarms 130 kann zu einem Lösen des wenigstens einen Formschlusses führen. Um dem entgegenzuwirken können der Führungsvorsprung 154 und die Rastnase 132 auf einer Geraden g (in Figur 2b mittels einer strich-punkt-punktierten Linie dargestellt) liegen, wobei die Gerade g die Drehachse 128 schneidet.

Bezüglich des in Figur 1 dargestellten, in Magnetschwebetechnologie ausgebildeten Fördersystems 100 sei noch nachgetragen, dass für ein Lösen der Rasteinheit 112 und der Gegenrasteinheit 114 voneinander eine entgegen der Verrastungsrichtung v wirkende Lösekraft ausgeübt werden muss. Die Lösekraft ist größer als die Beschleunigungskraft, die das Produkt von der maximalen Beschleunigung des Movers 106 in dem Fördersystem 100 in Verrastungsrichtung v, beispielsweise 30m/s² und der Summe der Masse der Fördervorrichtung 104 und der Masse einer maximalen Beladung der Aufnahme 108 ist. Mit maximaler Beladung ist die maximale Anzahl an Objekten 110 eines bestimmten Typs bezeichnet.

Wie in Figur 3c dargestellt, kann die Führungsnut 156 auch ein- oder beidseitig hinterschnitten ausgebildet sein. In diese Hinterschneidungen 156d kann eine bzw. können zwei Schultern 154a des Führungsvorsprungs 154 eingreifen. Gewünschtenfalls können die beiden Schultern 154a Teil eines tellerartigen Ansatzes 154b des Führungsvorsprungs 154 sein. Im Bereich der Einführschräge 156b muss die Führungsnut 156 entsprechend erweitert sein, um das Einführen der Schulter(n) 154a bzw. des Tellers 154b zu ermöglichen.

Das Zusammenwirken der Hinterschneidungen 156d und der Schultern 154a unterstützt die Hinterschneidung 134 und die Gegenhinterschneidung 136 dabei, ein unbeabsichtigtes Lösen von Mover 106 und Aufnahme 108 in Verbindungsrichtung V zu verhindern.

Zur Verbesserung der Führung des Führungsvorsprungs 154 in der Führungsnut 156 kann der Führungsvorsprung 154 auch noch einen zweiten Teller 154c aufweisen, der außerhalb der Führungsnut 156 angeordnet ist, so dass die Ränder der Führungsnut 156 zwischen den beiden Tellern 154b, 154c aufgenommen sind.

## Patentansprüche

**1.** Fördervorrichtung (104) für ein nicht zur Fördervorrichtung (104) gehörendes Objekt (110), umfassend
einen Mover (106) eines in Magnetschwebetechnologie ausgebildeten, nicht zur Fördervorrichtung (104) gehörenden Fördersystems (100), wobei der Mover (106) relativ zu einer Bewegungsfläche (102a) des Fördersystems (100) bewegbar ist, und
eine Aufnahme (108), die mit dem Mover (106) in einer Verbindungsrichtung (V) verbindbar ist und zur Aufnahme des Objekts (110) dient, **dadurch gekennzeichnet, dass** der Mover (106) eine Rasteinheit (112) umfasst und die Aufnahme (108) eine Gegenrasteinheit (114) umfasst,
wobei die Rasteinheit (112) und die Gegenrasteinheit (114) dazu eingerichtet sind, in einem verbundenen Zustand von Mover (106) und Aufnahme (108) in einer Verrastungsrichtung (v) miteinander in Rasteingriff zu stehen, und
wobei die Rasteinheit (112) wenigstens eine Anlagefläche (116) umfasst und die Gegenrasteinheit (114) wenigstens eine Gegenanlagefläche (118) umfasst, welche in dem verbundenen Zustand in wenigstens einer von der Verrastungsrichtung (v) verschiedenen Formschlussrichtung (F) formschlüssig aneinander anliegen.

**2.** Fördervorrichtung nach Anspruch 1,
**dadurch gekennzeichnet, dass** sich die wenigstens eine Formschlussrichtung (F) in einer orthogonal zur Verbindungsrichtung (V) verlaufenden Ebene erstreckt.

**3.** Fördervorrichtung nach Anspruch 2,
**dadurch gekennzeichnet, dass** sich die Verrastungsrichtung (v) ebenfalls in der orthogonal zur Verbindungsrichtung (V) verlaufenden Ebene erstreckt.

**4.** Fördervorrichtung nach einem der vorangehenden Ansprüche,
**dadurch gekennzeichnet, dass** die Rasteinheit (112) wenigstens eine weitere Anlagefläche (120) umfasst und die Gegenrasteinheit (114) wenigstens eine weitere Gegenanlagefläche (122) umfasst, welche in dem verbundenen Zustand in einer sowohl von der Verrastungsrichtung (v) als auch von der Formschlussrichtung (F) verschiedenen weiteren Formschlussrichtung (F₁) formschlüssig aneinander anliegen.

**5.** Fördervorrichtung nach einem der vorangehenden Ansprüche,
**dadurch gekennzeichnet, dass** sich bezogen auf die Verbindungsrichtung (V) die Verrastungsrichtung (v) in Umfangsrichtung (U) und die Formschlussrichtung (F) in radialer Richtung (r) erstreckt.

**6.** Fördervorrichtung nach einem der vorangehenden Ansprüche,
**dadurch gekennzeichnet, dass** die Rasteinheit (112) wenigstens einen Anschlag (124) umfasst und die Gegenrasteinheit (114) wenigstens einen Gegenanschlag (126) umfasst, welche dazu eingerichtet sind, in dem verbundenen Zustand zusammenzuwirken.

**7.** Fördervorrichtung nach einem der vorangehenden Ansprüche,
**dadurch gekennzeichnet, dass** eine der Einheiten (112, 114), Rasteinheit (112) oder Gegenrasteinheit (114), eine n-zählige Drehsymmetrie um eine Drehachse (128) aufweist, wobei n eine natürliche Zahl größer oder gleich 1 ist, und dass die Einheit (112, 114) n Rastarme (130) mit jeweils einer Rastnase (132) umfasst,
wobei vorzugsweise ein rastnasenseitiges Ende (132a) eines der Rastarme (130) in einem vorbestimmten Abstand (d) von einem benachbarten Anschlag (124) oder benachbarten Gegenanschlag (126) der Einheit (112, 114) angeordnet ist, wobei sich der Abstand (d) vorzugsweise über einen Winkel (α) von ungefähr 360°/6n bis ungefähr 360°/4n um die Drehachse (128) erstreckt.

**8.** Fördervorrichtung nach einem der vorangehenden Ansprüche,
**dadurch gekennzeichnet, dass** eine der Einheiten (114, 112), Gegenrasteinheit (114) oder vorzugsweise die Rasteinheit (112), eine Hinterschneidung (134) umfasst und die andere der Einheiten (112, 114), Rasteinheit (112) oder vorzugsweise die Gegenrasteinheit (114), eine Gegenhinterschneidung (136) umfasst, wobei in dem verbundenen Zustand die Hinterschneidung (134) und die Gegenhinterschneidung (136) in der Verbindungrichtung (V) miteinander in Eingriff stehen.

**9.** Fördervorrichtung nach Anspruch 7 und Anspruch 8,
**dadurch gekennzeichnet, dass** die Hinterschneidung (134) oder die Gegenhinterschneidung (136) an wenigstens einem der n Rastarme (130) vorgesehen ist, wobei sich die Hinterschneidung (134) oder die Gegenhinterschneidung (136) über einen Winkel (β) um die Drehachse (128) erstreckt, der kleiner oder gleich des Winkels (α) des Abstands (d) um die Drehachse (128) ist.

**10.** Fördervorrichtung einem der vorangehenden Ansprüche,
**dadurch gekennzeichnet, dass** eine der Einheiten (112, 114), Rasteinheit (112) oder Gegenrasteinheit (114), als Vorsprung (146) ausgebildet ist, und die andere der Einheiten (114, 112), Gegenrasteinheit (114) oder Rasteinheit (112), als Ausnehmung (148) ausgebildet ist, wobei in dem verbundenen Zustand der Vorsprung (146) wenigstens teilweise in der Ausnehmung (148) aufgenommen ist.

**11.** Fördervorrichtung nach einem der vorangehenden Ansprüche,
**dadurch gekennzeichnet, dass** die Fördervorrichtung (104) wenigstens eine weitere Verrastungseinheit (152) umfasst, die einen Führungsvorsprung (154) und eine Führungsnut (156) umfasst, die dazu eingerichtet ist, den Führungsvorsprung (152) aufzunehmen, wobei ein Führungselement (154, 156), Führungsvorsprung (152) oder Führungsnut (156), an dem Mover (106) angeordnet ist, und das andere Führungselement (154, 156), Führungsnut (156) oder Führungsvorsprung (152), an der Aufnahme (108) angeordnet ist.

**12.** Fördervorrichtung nach Anspruch 11,
**dadurch gekennzeichnet, dass** die Führungsnut (156) an einem von einem Einführende (156a) wegweisenden Ende (156c) einen Anschlag (158) aufweist, der dazu eingerichtet ist, im verbundenen Zustand an dem Führungsvorsprung (154) anzuliegen, wobei vorzugsweise in der Führungsnut (156) dem Anschlag (158) vorgelagert eine Verrastungsausbuchtung (160) ausgebildet ist.

**10.** Fördervorrichtung nach einem der Ansprüche 11 oder 12, sofern auf Anspruch 7 rückbezogen,
**dadurch gekennzeichnet, dass** der Führungsvorsprung (154) und die Rastnase (132) auf einer Geraden (g) liegen, wobei die Gerade (g) die Drehachse (128) schneidet.

**14.** Fördervorrichtung nach einem der vorangehenden Ansprüche,
**dadurch gekennzeichnet, dass** die Rasteinheit (112) und/oder die Aufnahme (108) aus einem elektrisch nicht leitendem und nicht magnetisierbaren Material, vorzugsweise Kunststoff, hergestellt ist bzw. sind.

**15.** In Magnetschwebetechnologie ausgebildetes Fördersystem (100) mit einem Stator (102), welcher eine Bewegungsfläche (102a) aufweist,
**dadurch gekennzeichnet, dass** das Fördersystem (100) wenigstens eine Fördervorrichtung (104) nach einem der vorangehenden Ansprüche umfasst, wobei der Mover (106) relativ zu der Bewegungsfläche (102a) bewegbar ist.

**16.** Fördersystem nach Anspruch 15,
**dadurch gekennzeichnet, dass** eine entgegen der Verrastungsrichtung (v) wirkende Lösekraft das Lösen von der Rasteinheit (112) und der Gegenrasteinheit (114) voneinander bewirkt, wobei die Lösekraft größer ist als eine Beschleunigungskraft, die das Produkt von der maximalen Beschleunigung des Movers (106) in dem Fördersystem (100) in Verrastungsrichtung (v) und der Summe der Masse der Fördervorrichtung (104) und der Masse einer maximalen Beladung der Aufnahme (108) ist.
